# EUROPÄISCHE PATENTSCHRIFT

(11) **EP 3 283 340 B1**
(45) Veröffentlichungstag und Bekanntmachung des Hinweises auf die Patenterteilung: **13.03.2019**
(21) Anmeldenummer: 16717889.6
(22) Anmeldetag: 15.04.2016
(51) Int. Cl.: B60T 17/00

(54) **LUFTMENGENREGLER UND LUFTTROCKNER FÜR EIN NUTZFAHRZEUG**
AIR FLOW REGULATOR AND AIR DRYER FOR UTILITY VEHICLE
RÉGULATEUR D'ÉCOULEMENT D'AIR ET SÉCHEUR POUR VEHICULE UTILITAIRE

(30) Priorität: 16.04.2015 DE 102015105794
(43) Veröffentlichungstag der Anmeldung: 21.02.2018
(73) Patentinhaber: KNORR-BREMSE Systeme für Nutzfahrzeuge GmbH, 80809 München (DE)
(72) Erfinder: TORMASI, Zoltan, 6000 Kecskemét (HU)
(86) Internationale Anmeldenummer: PCT/EP2016/058330
(87) Internationale Veröffentlichungsnummer: WO 2016/166273

(56) Entgegenhaltungen:
- WO-A1-85/05429
- WO-A1-90/12258
- US-A- 2 090 581

## Beschreibung

Die Erfindung bezieht sich auf einen Luftmengenregler und auf einen Lufttrockner für ein Nutzfahrzeug.

### Stand der Technik

Ein Lufttrockner für ein Nutzfahrzeug enthält ein feuchtigkeitsadsorbierendes Medium. Wenn Luft durch dieses Medium geleitet wird, hält dieses Medium die Feuchtigkeit zurück und hindert sie daran, in das Druckluftversorgungssystem des Fahrzeugs einzudringen. Das Medium kann nur eine endliche Menge an Feuchtigkeit adsorbieren; wenn es gesättigt ist, muss es regeneriert werden. Hierzu wird üblicherweise trockene Druckluft auf einem Regenerationspfad in umgekehrter Richtung durch das Medium geleitet. Diese Luft entfernt die Feuchtigkeit aus dem Medium und wird in die Atmosphäre abgeleitet.

Diese Regeneration ist teuer, da die getrocknete Druckluft zuvor von einem Kompressor produziert wurde, der teure Energie verbraucht. Sie kann auch nachteilig zeitlich mit einem hohen Druckluftbedarf der Druckluftverbraucher im Fahrzeug zusammenfallen. Um dieses Problem zu mildern, wird gemäß der DE 195 23 219 A1 die Regeneration über einen pneumatischen Schalter angestoßen, wenn der Systemdruck einen vorgegebenen Maximalwert erreicht; dies wird als Signal gewertet, dass genug Luft verfügbar ist. Die Regeneration wird für ein festes Zeitintervall fortgesetzt, so dass ein festes Volumen an Druckluft verwendet wird.

Bei den bislang von der Anmelderin verkauften Lufttrocknern ist dieses Volumen durch eine Stellschraube, die den freien Querschnitt des Regenerationspfades verändert, voreingestellt. Da verschiedene Fahrzeugtypen sich in ihrem Luftverbrauch unterscheiden und dementsprechend verschiedene Luftvolumina für die Regeneration benötigen, wird die Stellschraube ab Werk entsprechend dem Fahrzeugtyp, in dem der Lufttrockner zum Einsatz kommen soll, eingestellt und anschließend versiegelt.

Nachteilig kann dann der Lufttrockner nur in diesem Fahrzeugtyp eingesetzt werden. Der Benutzer kann nicht das Siegel brechen und die Stellschraube entsprechend dem Luftbedarf eines anderen Fahrzeugtyps einstellen, weil hierfür ein Messgerät für den tatsächlichen Luftstrom notwendig ist. Genauso wenig kann er die Stellschraube in die richtige Position zurückstellen, falls sie sich unbeabsichtigt lockern sollte.

Die US 2,090,581 offenbart einen Luftmengenregler, welcher hinsichtlich der Stellmechanik aus mehreren Einzelteilen aufgebaut ist. Gemäß Ausführungsbeispiel sind insgesamt zwei Stellglieder vorhanden, welche eine konische Grundform aufweisen. Hierin sind jeweils gleichgestaltete Luftkanalabschnitte ausgebildet. Mit Drehen der Stellglieder werden unterschiedliche Querschnitte zur Erzielung einer Drosselwirkung für den Luftmengenregler eingestellt.

Die WO 90/12258 offenbart einen anderen Luftmengenregler in ebenfalls konischer Ausführung. In einem Gehäuse sind zwei Stellglieder integriert, welche miteinander zusammenwirkend verschiedene Drosselquerschnitte durch Drehen derselben freigeben. Daran beteiligt sind radial nebeneinanderliegende Luftschlitze gleicher Gestalt.

Die WO 85/05429 offenbart einen Kraftstoffzufuhrmengenregler, dessen Stellglied kugel- oder zylinderförmig ausgebildet ist und verschiedenartige Durchflusskanäle und Kammern aufweist, welche entsprechend aufwendig zu fertigen sind.

### Aufgabe und Lösung

Es ist daher die Aufgabe der Erfindung, Lufttrockner in verschiedenen Fahrzeugtypen einsetzbar zu machen und sie zugleich vom Benutzer auf verschiedene Regenerationsvolumina einstellbar zu machen.

Diese Aufgabe wird erfindungsgemäß gelöst durch einen Luftmengenregler gemäß Hauptanspruch sowie durch einen Lufttrockner, der einen solchen Luftmengenregler enthält. Weitere vorteilhafte Ausgestaltungen ergeben sich aus den darauf rückbezogenen Unteransprüchen.

### Gegenstand der Erfindung

Im Rahmen der Erfindung wurde ein Luftmengenregler entwickelt. Dieser umfasst einen Einlassanschluss, einen Auslassanschluss und ein drehbares Stellglied, das in den Luftweg zwischen dem Einlassanschluss und dem Auslassanschluss hineinragt.

Dadurch kann der wirksame Querschnitt dieses Luftwegs durch eine Drehung des Stellglieds gesetzt werden.

Erfindungsgemäß weist das Stellglied mehrere verschiedene Luftkanäle oder Luftkanalabschnitte auf, und die Beiträge dieser Kanäle oder Kanalabschnitte zum wirksamen Querschnitt des Luftwegs können durch Drehen des Stellglieds in verschiedene Winkelpositionen ein- und/oder ausgeschaltet werden. Die Kanäle oder Kanalabschnitte können auch durch das Zusammenwirken des Stellglieds und des Gehäuses gebildet sein, d.h. sie können durch ein zwischen dem Stellglied einerseits und dem Gehäuse andererseits eingegrenztes Raumgebiet verlaufen.

Es wurde erkannt, dass durch dieses Merkmal eine eindeutige Zuordnung zwischen dem Wert des Luftwegquerschnitts und der Winkelposition des Stellglieds hergestellt werden kann. Die gemäß Stand der Technik eingesetzte Stellschraube war ein konisch geformtes Objekt, das den Luftweg teilweise versperrte. Sie wurde durch ein Gewinde in diesen Luftweg hinein- und aus ihm herausgefahren. Daher musste sie mehrfach um ihre eigene Achse gedreht werden, um den wirksamen Querschnitt des Luftwegs von "komplett geschlossen" zu "komplett frei" zu ändern. Der tatsächliche Wert des Querschnitts war für den Benutzer ohne Messinstrument für den resultierenden Luftstrom nicht sichtbar, und der Benutzer war nicht in der Lage, den Querschnitt neu auf einen gewünschten Wert einzustellen. Weiterhin hing der Querschnitt in kritischer Weise von der Winkelposition der Stellschraube ab. Gemäß der Erfindung werden nun stattdessen die Werte des Luftwegquerschnitts durch die Querschnitte der Kanäle oder Kanalabschnitte bestimmt, die zu einem gegebenen Zeitpunkt eingeschaltet sind. Das Verhältnis zwischen einer Änderung in der Winkelposition des Stellglieds und der resultierenden Änderung im Luftwegquerschnitt ist nicht mehr durch die Steigung eines Gewindes fest vorgegeben.

Besonders vorteilhaft sind hierbei der Eingangsanschluss und der Ausgangsanschluss gegeneinander abgedichtet, und es ist durch die Drehung des Stellgliedes einstellbar, durch welche bzw. durch wie viele der Kanäle oder Kanalabschnitte diese Abdichtung überbrückt und/oder umgangen wird. Die Dichtung kann beispielsweise durch eine am Stellglied angeordnete, gegen sein Gehäuse außendichtend wirkende, umlaufende Dichtung bereitgestellt werden, welche nur dort unterbrochen ist, wo sich Kanäle oder Kanalabschnitte befinden. Sie wird dann durch diese Kanäle oder Kanalabschnitte überbrückt.

Vorteilhaft ist das Stellglied in seinem Gehäuse durch mindestens ein Übergangselement axial geführt, welches in der axialen Richtung zwecks Vermeidung eines Verklemmens zwischen Stellglied und Gehäuse in axialer Richtung abgeschrägt und/oder abgerundet ist. Ein solches Verklemmen würde nicht nur das Einführen des Stellglieds in das Gehäuse oder spätere axiale Bewegungen des Stellglieds im Gehäuse behindern, sondern auch die Drehungen zwischen den verschiedenen Winkelpositionen. Das Übergangselement kann vorteilhaft in einem Winkel zwischen 30 und 60 Grad zur axialen Richtung abgeschrägt sein. Eine Abrundung des Übergangselements kann ein Verklemmen ebenso gut verhindern, ist jedoch aufwändiger zu fertigen.

Besonders vorteilhaft ist das Übergangselement als Dichtung ausgebildet. Dann kann es insbesondere auch die Funktion der Abdichtung zwischen Eingangsanschluss und Ausganganschluss erfüllen.

In einer vorteilhaften Ausgestaltung der Erfindung sind mindestens zwei Kanäle oder Kanalabschnitte entlang eines Umfangs des Stellglieds und/oder seines Gehäuses an verschiedenen Winkelpositionen angeordnet. Durch eine Drehung des Stellglieds kann dann jeweils einer dieser beiden Kanäle eingeschaltet werden. Ausgehend vom Stand der Technik erfordert diese Ausgestaltung den geringsten konstruktiven Änderungsaufwand: die bisher eingesetzte Stellschraube wird durch das neue Stellglied ersetzt, und das Gewinde im Gehäuse, das zur Aufnahme der bisherigen Stellschraube nötig war, wird weggelassen.

In einer besonders vorteilhaften Ausgestaltung der Erfindung sind mindestens zwei Kanäle oder Kanalabschnitte koaxial zueinander angeordnet. Dann ist das Stellglied am einfachsten gegen sein Gehäuse abzudichten. Beispielsweise kann hierfür eine umlaufende Dichtung verwendet werden, die nur in der Winkelposition, in der die Kanäle oder Kanalabschnitte angeordnet sind, unterbrochen ist.

Vorteilhaft kann der Beitrag mindestens eines Kanals oder Kanalabschnitts zum wirksamen Querschnitt des Luftwegs durch die Kombination einer Drehung und einer axialen Verschiebung des Stellgliedes ein- und/oder ausgeschaltet werden. Wenn der Luftmengenregler in einem Fahrzeug eingesetzt wird, hat dies den Vorteil, dass das Stellglied besser gegen eine unbeabsichtigte Verstellung des Luftwegquerschnitts gesichert ist. Es ist nicht nötig, das Stellglied mit Farbe oder Klebstoff zu versiegeln.

In Verbindung mit einer koaxialen Anordnung der Kanäle oder Kanalabschnitte wird der zusätzliche Vorteil erzielt, dass der wirksame Querschnitt primär durch die axiale Verschiebung des Stellgliedes gewählt wird, während diese axiale Verschiebung wiederum zu einer eindeutigen, vom Benutzer ablesbaren bzw. einstellbaren, Winkelposition des Stellgliedes korrespondiert.

In einer weiteren besonders vorteilhaften Ausgestaltung der Erfindung ist mindestens eine der verschiedenen Winkelpositionen durch einen Anschlag eingefasst, so dass sich das Stellglied mindestens dann, wenn am Einlassanschluss ein Überdruck anliegt, in Bezug auf eine Rückstellkraft in einer Potentialmulde befindet. Diese Rückstellkraft kann insbesondere axial wirken. Um den Anschlag zu überwinden und den Luftwegquerschnitt zu ändern, ist es dann erforderlich, senkrecht zur Drehrichtung eine der Rückstellkraft entgegen gerichtete Kraft auszuüben und gleichzeitig die Drehung fortzusetzen.

Beispielsweise kann jede Winkelposition des Stellglieds einer Fixierungsebene am Stellglied entsprechen, die auf einem am Gehäuse des Stellglieds angeordneten Fixierungsstift aufliegt. Wenn am Einlassanschluss ein Überdruck anliegt, übt dies eine Kraft auf das Stellglied aus, die versucht, das Stellglied aus seinem Gehäuse herauszutreiben. Diese Kraft wird über die Fixierungsebene auf den Fixierungsstift übertragen. Wenn die Fixierungsebene beiderseits der ihr zugeordneten Winkelposition durch Erhebungen als Anschläge begrenzt ist, kann der Fixierungsstift nur von einer Fixierungsebene auf die andere gelangen, wenn hierzu das Stellglied gegen die durch den Druck ausgeübte Rückstellkraft weiter ins Gehäuse hineingedrückt wird. Dies ist ein noch besserer Schutz gegen unbeabsichtigte Verstellung des Luftwegquerschnitts.

Mindestens ein Teil der Rückstellkraft kann durch eine Feder bereitgestellt werden. Dies stellt sicher, dass immer zumindest eine gewisse Rückstellkraft vorhanden ist, auch wenn am Einlassanschluss kein Überdruck anliegt. Wenn das Stellglied durch Hineindrücken in das Gehäuse und anschließendes Drehen in eine bestimmte Position geschaltet wurde, macht die Feder es auch einfacher, in eine andere Position umzuschalten, weil sie ständig versucht, das Stellglied wieder aus dem Gehäuse herauszutreiben.

Vorteilhaft werden zwischen drei und fünf verschiedene Winkelpositionen mit voneinander verschiedenen wirksamen Querschnitten des Luftwegs bereitgestellt. Drei Positionen ("niedrig - L", "mittel - M" und "hoch - H") bieten gegenüber dem Stand der Technik, gemäß dem keine Einstellung durch den Benutzer möglich war, bereits eine drastisch erhöhte Flexibilität. Beispielsweise kann die Einstellung "niedrig" einem Volumen des dem Lufttrockner nachgeschalteten Druckluftreservoirs zwischen 60 und 90 Litern, die Einstellung "mittel" einem Reservoirvolumen zwischen 100 und 160 Litern und die Einstellung "hoch" einem Reservoirvolumen zwischen 170 und 220 Litern entsprechen. Das Reservoirvolumen wird beim Fahrzeugbau üblicherweise nach dem Druckluftbedarf der im Fahrzeug vorhandenen Druckluftverbraucher dimensioniert und ist daher zumindest im Auslieferungszustand des Fahrzeugs mit diesem Druckluftbedarf korreliert. Vom Druckluftbedarf wiederum hängt der Bedarf an Regenerationsluft ab. Bei nachträglichen Änderungen am Fahrzeug, etwa Anbau eines druckluftbetriebenen Arbeitsgeräts, kann sich der Druckluftbedarf erhöhen, und der Benutzer kann dementsprechend einen größeren wirksamen Querschnitt des Luftwegs wählen, um die Menge an Regenerationsluft anzupassen.

Wenn mehr als fünf verschiedene Winkelpositionen vorgesehen sind, kann es notwendig werden, den Durchmesser des Stellglieds zu vergrößern, um diese Positionen deutlich voneinander unterscheidbar zu halten.

In einer weiteren besonders vorteilhaften Ausgestaltung der Erfindung ist das Stellglied nur in mindestens einer weiteren Montage-Winkelposition in sein Gehäuse einsetzbar oder aus ihm herausnehmbar. Das Stellglied kann dann mit nur einem Schraubendreher als Werkzeug zwecks Drehung eingesetzt und herausgenommen werden; weitere Werkzeuge sind nicht erforderlich. Es ist weiterhin sichergestellt, dass das Stellglied nicht verwendet werden kann, um den Querschnitt des Luftwegs zu setzen, bis es korrekt in seinem Gehäuse befestigt worden ist. Das Stellglied kann also nicht nach inkorrekter Montage durch den Druck aus dem Gehäuse herausgeschossen werden; dies verbessert die Betriebssicherheit.

Die Hauptanwendung des Luftmengenreglers ist ein Lufttrockner für ein Nutzfahrzeug. Der Lufttrockner umfasst ein feuchtigkeitsadsorbierendes Medium, durch das Luft in einer Förderrichtung geführt werden kann, um getrocknet zu werden. Er weist weiterhin Mittel zur Führung von Luft auf einem Regerationspfad in umgekehrter Richtung durch das feuchtigkeitsadsorbierende Medium auf, um die gesammelte Feuchtigkeit aus dem adsorbierenden Medium zu entfernen. Diesem Lufttrockner wird die erfindungsgemäße Wirkung verliehen, indem ein erfindungsgemäßer Luftmengenregler in den Regenerationspfad geschaltet ist. Wenn, wie üblich, der Regenerationspfad für eine feste Zeitdauer geöffnet wird, bestimmt der Querschnitt des Regenerationspfades, der durch den Luftmengenregler gesetzt wird, wie viel Luft für die Regeneration des feuchtigkeitsadsorbierenden Mediums verwendet wird. Diese Luftmenge, die früher nur ab Werk festgesetzt wurde, kann nun erstmals vom Benutzer eingestellt werden.

Das generelle Konzept, einen wirksamen Querschnitt eines Luftwegs in diskreten Stufen zu verändern, kann nicht nur zur Regulierung einer pro Zeiteinheit fließenden Luftmenge verwendet werden. Es kann beispielsweise auch verwendet werden, um den Druck zu regulieren.

Bei der Anwendung in einem Luftaufbereitungssystem muss der Luftmengenregler nicht notwendigerweise im Regenerationsluftpfad untergebracht sein. Er kann beispielsweise auch im Entlüftungspfad eines Steuerkreises für ein pneumatisch betätigtes Ventil sein, das den Regenerationsluftpfad öffnet. Wird der Steuerkreis zu Beginn der Regeneration belüftet und anschließend über den Luftmengenregler entlüftet, so bestimmt der gewählte wirksame Querschnitt des Luftwegs durch den Luftmengenregler die Geschwindigkeit dieser Entlüftung und somit die Zeitdauer, bis das Ventil wieder schließt.

### Spezieller Beschreibungsteil

Nachfolgend wird der Gegenstand der Erfindung an Hand von Figuren erläutert, ohne dass der Gegenstand der Erfindung hierdurch beschränkt wird. Es ist gezeigt:
Figur 1: Lufttrockner für ein Nutzfahrzeug gemäß der Erfindung.
Figur 2: Luftmengenregler gemäß der Erfindung.
Figur 3: Detailzeichnung des Luftmengenreglers in der Einstellung für mittlere Luftmenge.

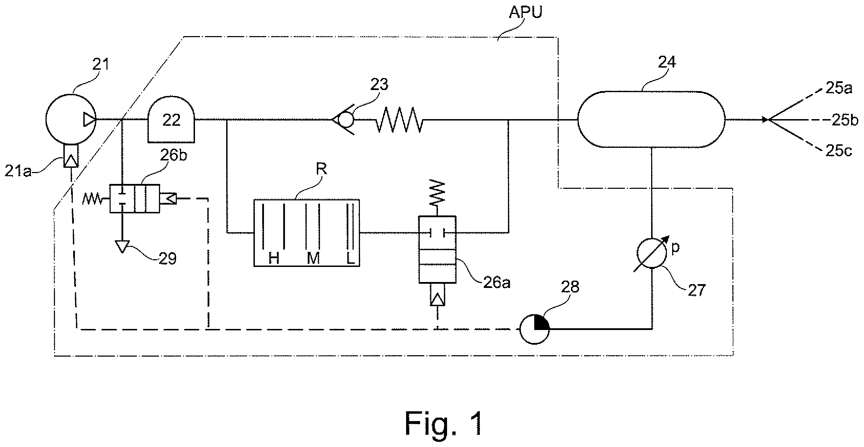

Figur 1 zeigt einen Lufttrockner für ein Nutzfahrzeug gemäß der Erfindung. Ein Kompressor 21 saugt Luft aus der Atmosphäre an. Die Luft wird von einem feuchtigkeitsadsorbierenden Medium 22 getrocknet und gelangt durch ein Rückschlagventil 23 in ein Reservoir 24. Die verschiedenen Druckluftverbraucher 25a, 25b und 25c des Fahrzeugs beziehen ihre Druckluft jeweils aus diesem Reservoir 24.

Wenn das Druckmessgerät 27 registriert, dass der Druck p im Reservoir 24 einen Maximalwert erreicht hat (und andere Bedingungen betreffend die Sättigung des feuchtigkeitsadsorbierenden Mediums 22 erfüllt sind, die in Figur 1 aus Gründen der Klarheit weggelassen wurden), startet es den Timer 28, der die Regeneration des feuchtigkeitsadsorbierenden Mediums 22 für eine feste Zeitspanne anstößt. Um die Regeneration durchzuführen, wird der Kompressor 21 durch Vorlage eines entsprechenden Signals an seinem Steuereingang 21a gestoppt. Das Ventil 26a wird geöffnet, so dass trockene Druckluft aus dem Reservoir 24 das Rückschlagventil 23 umgehen kann. Diese Luft passiert das feuchtigkeitsadsorbierende Medium 22 in umgekehrter Richtung. Das Ventil 26b wird geöffnet, so dass die mit Feuchtigkeit beladene Luft über den Auslass 29 in die Atmosphäre entlassen werden kann.

Das Volumen an Druckluft, das in der festen Zeitspanne für die Regeneration verbraucht wird, ist durch den Luftmengenregler R vorgegeben. Er ist in dem Umgehungspfad um das Rückschlagventil 23 herum angeordnet, an der gleichen Stelle in der Nähe des Timers 28, an der gemäß Stand der Technik die Stellschraube saß. Der Luftmengenregler R bietet einen variablen Querschnitt für den Luftfluss entlang dieses Pfades, der zwischen drei Positionen "hoch - H", "mittel - M" und "niedrig - L" umgeschaltet werden kann.

Alle Komponenten innerhalb der in Figur 1 gezeigten gestrichpunkteten Linie werden als eine Baugruppe, die Luftaufbereitungseinheit (air processing unit, APU), verkauft. Da der Luftfluss für die Regeneration jetzt vom Benutzer auf die Bedürfnisse verschiedener Fahrzeugtypen eingestellt werden kann, kann ein und dieselbe Luftaufbereitungseinheit nun für ganz verschiedene Fahrzeuge verwendet bzw. wiederverwendet werden.

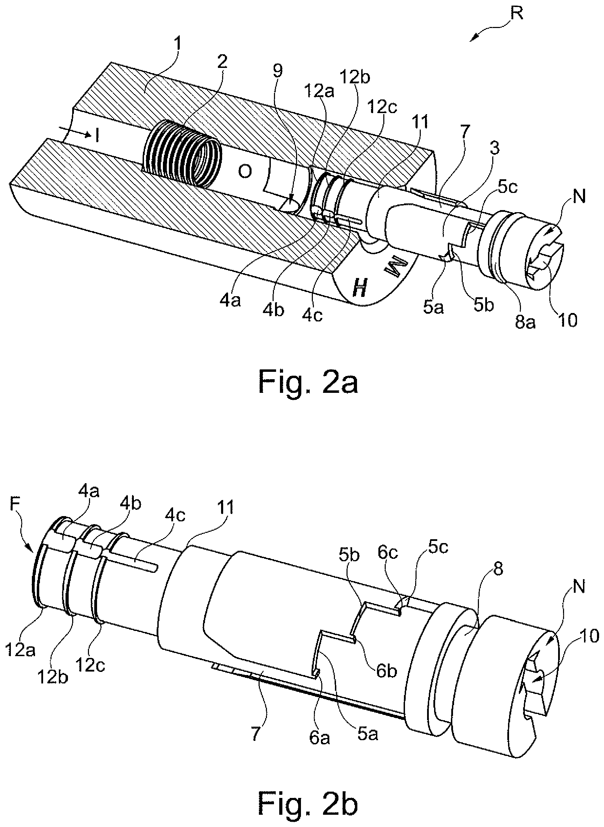

Figur 2a zeigt ein Ausführungsbeispiel des Luftmengenreglers R gemäß der Erfindung. Das Gehäuse 1 des Reglers hat einen Einlassanschluss I und einen Auslassanschluss O. Da das Gehäuse 1 in Figur 2a aufgeschnitten dargestellt ist, ist die Verbindung des Auslassanschlusses O zum Außenraum außerhalb des Gehäuses 1 nicht sichtbar. Ein Drosselstift 3, der innerhalb des Gehäuses 1 drehbar gelagert ist, dient als Stellglied. Das Gehäuse 1 enthält eine Feder 2, die eine Rückstellkraft für den Drosselstift 3 bereitstellt. Es hat einen Fixierstift 9, auf den sich die Fixierungsebenen 5a, 5b und 5c des Drosselstifts 3 abstützen können, so dass der Drosselstift 3 nicht entweder durch die Feder 2 oder durch den Überdruck am Einlassanschluss I aus dem Gehäuse 1 getrieben wird. Die Fixierebenen 5a, 5b und 5c werden durch Erhebungen 6a, 6b bzw. 6c begrenzt. Die Fixierebenen 5a, 5b und 5c, die Erhebungen 6a, 6b und 6c, der Montagekanal 7 sowie der Fixierstift 9 sind jeweils in einer entlang des Außenumfangs des Drosselstifts 3 bzw. entlang des Innenumfangs des Gehäuses 1 gegenüber der in Figur 2a eingezeichneten Position um 180 Grad versetzten Position ein zweites Mal vorhanden.

Um den Luftmengenregler R zusammenzusetzen, wird der Drosselstift 3 zunächst in eine Position gedreht, in der die Winkelposition des Montagekanals 7 mit der Position des Fixierstifts 9 übereinstimmt. Das entfernte Ende F des Drosselstifts 3 wird nun durch die Feder 2 geschoben, so dass die Feder gegen ihren Sitz 11 am Drosselstift 3 gedrückt wird und der Fixierstift 9 durch den Montagekanal 7 gleitet, bis er schließlich auch an der ersten Erhebung 6a vorbeigleitet. Der Drosselstift 3 wird anschließend so gedreht, dass die Fixierebene 5a über dem Fixierstift 9 schwebt. Schließlich wird der Drosselstift 3 losgelassen, und die Fixierebene 5a stützt sich auf dem Fixierstift 9 ab. Wenn der Benutzer nun versucht, den Drosselstift 3 zu drehen, wird diese Drehbewegung durch eine der Erhebungen 6a oder 6b gestoppt.

Indem der Drosselstift 3 weiter gegen die Wirkung der Feder 2 in das Gehäuse 1 gedrückt wird, kann eine der anderen beiden Fixierebenen 5b und 5c auf dem Fixierstift 9 abgestützt werden. Die Fixierebenen 5a, 5b und 5c liegen in diesem Ausführungsbeispiel in axialer Richtung jeweils 2 mm auseinander.

Das ferne Ende F des Drosselstifts 3 ragt in den Bereich des Einlassanschlusses I hinein. Sein Außenumfang ist über die Dichtungen 12a, 12b und 12c gegen den Innenumfang des Einlassanschlusses I abgedichtet. Diese Dichtungen sind lediglich im Bereich der Kanäle 4a, 4b und 4c unterbrochen. Je nachdem welcher Kanal 4a, 4b oder 4c den Grenzbereich zwischen dem Einlassanschluss I und dem Auslassanschluss O überbrückt, wird ein Luftweg mit hohem, mittlerem oder niedrigem Querschnitt zwischen dem Einlassanschluss I und dem Auslassanschluss O hergestellt. Dabei stellt dieser Grenzbereich zugleich auch den Sitz der Feder 2 im Gehäuse 1 dar.

Dies wird in Figur 2b näher erläutert. Der Kanal 4a, 4b oder 4c überbrückt den Grenzbereich zwischen den Bereichen I und O, wenn die Fixierebene 5a, 5b bzw. 5c auf dem Fixierstift 9 abgestützt ist. Jeder dieser Stellungen ist eine eindeutige Winkelposition des Drosselstifts 3 relativ zum Gehäuse 1 zugeordnet. Ein Pfeil 10 auf dem nahen Ende des Drosselstifts 3 zeigt dementsprechend auf Markierungen "H" für "hoch", "M" für "mittel" und "L" für "low = niedrig" an der Außenseite des Gehäuses 1. Wenn der Fixierstift mit dem Montagekanal 7 fluchtet, zeigt der Pfeil 10 auf eine Markierung "0".

Das nahe Ende N des Drosselstifts 3 hat eine Nut 3 zur Aufnahme eines O-Rings 8a. Dieser O-Ring 8a dichtet den Außenumfang des nahen Endes N gegen den Innenumfang des Gehäuses 1 ab. In Figur 2a ist der O-Ring 8a vorhanden.

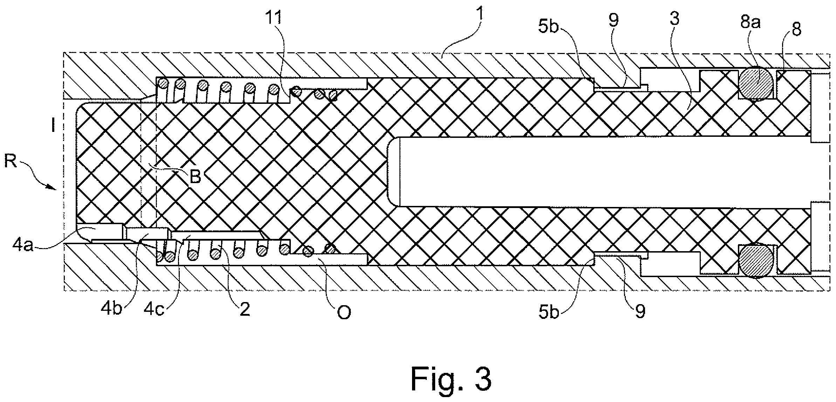

Das Umschalten zwischen den verschiedenen wirksamen Querschnitten des Luftwegs wird in Figur 3 in Schnittzeichnung weiter verdeutlicht. Auf dem Fixierstift 9 ist die Fixierebene 5b abgestützt, so dass der Drosselstift 3 sich in der "mittleren" (M) Position befindet. Der Grenzbereich zwischen dem Einlassanschluss I und dem Auslassanschluss O entspricht dem Gebiet, in dem der Innendurchmesser des Gehäuses 1 sich auf dem Weg vom Bereich I zum Bereich O konisch vergrößert; dieser Grenzbereich B ist durch gestrichelte Linien markiert. In der "mittleren" Position des Drosselstifts 3 überbrückt der Kanal 4c diesen Grenzbereich und stellt somit den einzigen Beitrag zum wirksamen Luftwegquerschnitt auf dem Weg von I nach O dar. Wäre der Drosselstift in der "hohen" (H) Position, würde der Kanal 4a den Grenzbereich B überbrücken und einen größeren Querschnitt für den Luftweg von I nach O bereitstellen. Wäre der Drosselstift hingegen in der "niedrigen" (L) Position, würde der Kanal 4c den Grenzbereich B überbrücken, und der Querschnitt des Luftwegs von I nach O wäre kleiner.

In Figur 3 ist die Nut 8 mit einem O-Ring 8a belegt.

Das Gehäuse 1 wurde in konventioneller Weise durch Gießen angefertigt; der Fixierstift 9 wurde durch eine entsprechende Änderung der Gussform in das Gehäuse 1 eingebracht.

### Bezugszeichenliste

- 1: Gehäuse
- 2: Feder
- 3: Drosselstift
- 4a, 4b, 4c: Kanäle für hohen, mittleren und niedrigen Luftfluss durch den Drosselstift 3
- 5a, 5b, 5c: Fixierebenen zum Einschalten der Kanäle 4a, 4b bzw. 4c
- 6a, 6b, 6c: Erhebungen der Fixierebenen 5a, 5b, 5c
- 7: Montagekanal
- 8: Nut für O-Ring
- 8a: O-Ring
- 9: Fixierstift im Gehäuse 1
- 10: Pfeil
- 11: Sitz
- 12a, 12b, 12c: Dichtungen
- 21: Kompressor
- 21a: Steuereingang des Kompressors 21
- 22: feuchtigkeitsadsorbierendes Medium
- 23: Rückschlagventil
- 24: Luftreservoir
- 25a, 25b, 25c: Druckluftverbraucher des Fahrzeugs
- 26a, 26b: Ventile
- 27: Druckmessgerät
- 28: Timer
- 29: Auslass
- APU: Luftaufbereitungseinheit (air processing unit)
- B: Grenzbereich zwischen Einlassanschlusst I und Auslassanschluss O
- F: fernes Ende des Drosselstifts 3
- H: "hohe" Position für den Luftfluss
- I: Einlassanschluss
- L: "niedrige" ("low") Position für den Luftfluss
- M: "mittlere" Position für den Luftfluss
- N: nahes Ende des Drosselstifts 3
- O: Auslassanschluss
- R: Luftmengenregler

## Patentansprüche

1. Luftmengenregler (R), umfassend einen Einlassanschluss (I), einen Auslassanschluss (O) und ein drehbares Stellglied (3), das in den Luftweg zwischen Einlassanschluss (I) und Auslassanschluss (O) hineinragt, so dass der wirksame Querschnitt dieses Luftwegs durch eine Drehung des Stellgliedes (3) gesetzt werden kann,
**dadurch gekennzeichnet, dass**
das einzige Stellglied (3) als Drosselstift ausgebildet ist und mehrere je verschiedene Luftkanäle oder Luftkanalabschnitte (4a, 4b, 4c) aufweist, wobei mindestens zwei Kanäle oder Kanalabschnitte (4a, 4b, 4c) zueinander koaxial angeordnet sind und die Beiträge dieser Kanäle oder Kanalabschnitte (4a, 4b, 4c) zum wirksamen Querschnitt des Luftwegs durch Drehen des Stellglieds (3) in verschiedene Winkelpositionen (H, M, L) ein- und/oder ausgeschaltet werden können.

2. Luftmengenregler (R) nach Anspruch 1, **dadurch gekennzeichnet, dass** der Eingangsanschluss (I) und der Ausgangsanschluss (O) gegeneinander abgedichtet sind und durch die Drehung des Stellgliedes (3) einstellbar ist, durch welche bzw. durch wie viele der Kanäle oder Kanalabschnitte (4a, 4b, 4c) diese Abdichtung (12a, 12b, 12c) überbrückt und/oder umgangen wird.

3. Luftmengenregler (R) nach einem der Ansprüche 1 bis 2, **dadurch gekennzeichnet, dass** das Stellglied (3) in seinem Gehäuse (1) durch mindestens ein Übergangselement axial geführt ist, welches in der axialen Richtung zwecks Vermeidung eines Verklemmens zwischen Stellglied (3) und Gehäuse (1) in axialer Richtung abgeschrägt und/oder abgerundet ist.

4. Luftmengenregler (R) nach Anspruch 3, **dadurch gekennzeichnet, dass** das Übergangselement in einem Winkel zwischen 30 und 60 Grad zur axialen Richtung abgeschrägt ist.

5. Luftmengenregler nach einem der Ansprüche 3 bis 4, **dadurch gekennzeichnet, dass** das Übergangselement als Dichtung (12a, 12b, 12c) ausgebildet ist.

6. Luftmengenregler (R) nach einem der Ansprüche 1 bis 5, **dadurch gekennzeichnet, dass** der Beitrag mindestens eines Kanals oder Kanalabschnitts (4a, 4b, 4c) zum wirksamen Querschnitt des Luftwegs durch die Kombination einer Drehung und einer axialen Verschiebung des Stellgliedes (3) ein- und/oder ausgeschaltet werden kann.

7. Luftmengenregler (R) nach einem der Ansprüche 1 bis 6, **dadurch gekennzeichnet, dass** mindestens eine der verschiedenen Winkelpositionen (H, M, L) durch einen Anschlag (6a, 6b, 6c) eingefasst ist, so dass sich das Stellglied mindestens dann, wenn am Einlassanschluss (I) ein Überdruck anliegt, in Bezug auf eine Rückstellkraft in einer Potentialmulde befindet.

8. Luftmengenregler (R) nach Anspruch 7, **dadurch gekennzeichnet, dass** mindestens ein Teil der Rückstellkraft durch eine Feder (2) bereitgestellt wird.

9. Luftmengenregler (R) nach einem der Ansprüche 1 bis 8, **dadurch gekennzeichnet, dass** zwischen drei und fünf verschiedene Winkelpositionen (H, M, L) mit voneinander verschiedenen wirksamen Querschnitten des Luftwegs bereitgestellt werden.

10. Luftmengenregler (R) nach einem der Ansprüche 1 bis 9, **dadurch gekennzeichnet, dass** das Stellglied (3) nur in mindestens einer weiteren Montage-Winkelposition in sein Gehäuse (1) einsetzbar oder aus ihm herausnehmbar ist.

11. Lufttrockner (APU) für ein Nutzfahrzeug, umfassend ein feuchtigkeitsadsorbierendes Medium (22), durch das Luft zwecks Trocknung in einer Förderrichtung geführt werden kann, sowie Mittel zur Führung von Luft auf einem Regerationspfad (26a, R, 22, 26b, 29) in umgekehrter Richtung durch das feuchtigkeitsadsorbierende Medium (22), um die gesammelte Feuchtigkeit aus dem adsorbierenden Medium (22) zu entfernen, **dadurch gekennzeichnet, dass** ein Luftmengenregler (R) nach einem der Ansprüche 1 bis 10 in den Regenerationspfad (26a, R, 22, 26b, 29) geschaltet ist.

## Claims

1. An air flow regulator (R) comprising an inlet port (I), an outlet port (O) and a rotatable actuator (3), which projects into the air path between the inlet port (I) and outlet port (O) such that the effective cross-section of this air path can be set by rotating the actuator (3),
**characterised in that**
the single actuator (3) is designed as a throttle pin and has a plurality of different air channels or air channel portions (4a, 4b, 4c), at least two channels or channel portions (4a, 4b, 4c) being arranged coaxially in relation to one another and it being to possible to activate and/or deactivate the contributions of these channels or channel portions (4a, 4b, 4c) to the effective cross-section of the air path by rotating the actuator (3) into different angular positions (H, M, L).

2. An air flow regulator (R) according to claim 1, **characterised in that** the inlet port (I) and the outlet port (O) are sealed with respect to one another and that it is possible by rotating the actuator (3) to set which and/or how many of the channels or channel portions (4a, 4b, 4c) bridge and/or bypass this seal (12a, 12b, 12c).

3. An air flow regulator (R) according to any of claims 1 and 2, **characterised in that** the actuator (3) is guided axially in its housing (1) by at least one transition element, which is bevelled and/or rounded off in the axial direction to avoid jamming between the actuator (3) and housing (1) in the axial direction.

4. An air flow regulator (R) according to claim 3, **characterised in that** the transition element is bevelled at an angle of between 30 and 60 degrees to the axial direction.

5. An air flow regulator according to any of claims 3 to 4, **characterised in that** the transition element takes the form of a seal (12a, 12b, 12c).

6. An air flow regulator (R) according to any of claims 1 to 5, **characterised in that** the contribution of at least one channel or channel portion (4a, 4b, 4c) to the effective cross-section of the air path can be activated and/or deactivated by the combination of a rotation and an axial displacement of the actuator (3).

7. An air flow regulator (R) according to any of claims 1 to 6, **characterised in that** at least one of the different angular positions (H, M, L) is defined by a stop (6a, 6b, 6c) such that, at least when a positive pressure prevails at the inlet port (I), the actuator is situated in a potential trough with respect to a restoring force.

8. An air flow regulator (R) according to claim 7, **characterised in that** at least a part of the restoring force is provided by a spring (2).

9. An air flow regulator (R) according to any of claims 1 to 8, **characterised in that** between three and five different angular positions (H, M, L) with mutually different effective cross-sections of the air path are provided.

10. An air flow regulator (R) according to any of claims 1 to 9, **characterised in that** the actuator (3) can only be inserted into or removed from its housing (1) in at least one further mounting angular position.

11. An air dryer (APU) for a utility vehicle comprising a moisture-adsorbing medium (22), through which air can be guided in a conveying direction in order to be dried, and means for guiding air through the moisture-adsorbing medium (22) in the reverse direction along a regeneration path (26a, R, 22, 26b, 29) in order to remove the accumulated moisture from the adsorbing medium (22), **characterised in that** an air flow regulator (R) according to any of claims 1 to 10 is connected to the regeneration path (26a, R, 22, 26b, 29).

## Revendications

1. Régulateur (R) de quantité d'air, comprenant un raccord (I) d'entrée, un raccord (O) de sortie et un organe (3) tournant de réglage, qui pénètre dans le trajet de l'air entre le raccord (I) d'entrée et le raccord (O) de sortie, de manière à pouvoir régler la section transversale efficace de ce trajet de l'air par une rotation de l'organe (3) de réglage,
**caractérisé en ce que**
l'organe (3) de réglage unique est constitué sous la forme d'une broche d'étranglement et a plusieurs canaux pour de l'air ou tronçons (4a, 4b, 4c) de canal pour de l'air différents, au moins deux canaux ou tronçons (4a, 4b, 4c) de canal étant coaxiaux entre eux et les contributions de ces canaux ou tronçons (4a, 4b, 4c) de canal à la section transversale efficace du trajet d'air pouvant être apportés et/ou exclus en faisant tourner l'organe (3) de réglage dans des positions (H, M, L) angulaires différentes.

2. Régulateur (R) de quantité d'air suivant la revendication 1, **caractérisé en ce que** le raccord (I) d'entrée et le raccord (O) de sortie sont rendus étanches l'un par rapport à l'autre et il peut être réglé par la rotation de l'organe (3) de réglage, les canaux ou le nombre des canaux ou tronçons (4a, 4b, 4c) de canal, par lesquels cette étanchéité (12a, 12b, 12c) est court-circuitée ou contournée.

3. Régulateur (R) de quantité d'air suivant l'une des revendications 1 à 2, **caractérisé en ce que** l'organe (3) de réglage est guidé axialement dans son boîtier (1) par au moins un élément de transition, qui, dans la direction axiale, est biseauté et/ou arrondi dans la direction axiale, en vue d'empêcher un coincement entre l'organe (3) de réglage et le boîtier (1) dans la direction axiale.

4. Régulateur (R) de quantité d'air suivant la revendication 3, **caractérisé en ce que** l'élément de transition est biseauté suivant un angle compris entre 30 et 60 degrés par rapport à la direction axiale.

5. Régulateur (R) de quantité d'air suivant l'une des revendications 3 à 4, **caractérisé en ce que** l'élément de transition est constitué en garniture (12a, 12b, 12c) d'étanchéité.

6. Régulateur (R) de quantité d'air suivant l'une des revendications 1 à 5, **caractérisé en ce que** la contribution d'au moins un canal ou un tronçon (4a, 4b, 4c) de canal à la section transversale efficace du trajet d'air peut être apportée ou exclue par la combinaison d'une rotation et d'un déplacement axial de l'organe (3) de réglage.

7. Régulateur (R) de quantité d'air suivant l'une des revendications 1 à 6, **caractérisé en ce qu'**au moins l'une des positions (H,M, L) angulaires différentes est bordée par une butée (6a, 6b, 6c), de manière à ce que l'organe de réglage se trouve, au moins lorsqu'une surpression s'applique au raccord (I) d'entrée, dans une cuvette de potentiel par rapport à une force de rappel.

8. Régulateur (R) de quantité d'air suivant la revendication 7, **caractérisé en ce qu'**au moins une partie de la force de rappel est procurée par un ressort (2).

9. Régulateur (R) de quantité d'air suivant l'une des revendications 1 à 8, **caractérisé en ce qu'**il est mis à disposition entre trois et cinq positions (H, M, L) angulaires différentes ayant des sections transversales efficaces différentes les unes des autres du trajet de l'air.

10. Régulateur (R) de quantité d'air suivant l'une des revendications 1 à 9, **caractérisé en ce que** l'organe (3) de réglage ne peut être mis dans son boîtier (1) ou en être retiré que dans au moins une autre position angulaire de montage supplémentaire.

11. Sécheur (APU) d'air pour un véhicule utilitaire, comprenant un milieu (22) adsorbant l'humidité, à travers lequel l'air peut passer en vue d'être séché dans un sens de transport, ainsi que de moyens de conduite de l'air sur un trajet (26a, R, 22, 26b, 29) de régénération dans le sens contraire à travers le milieu (22) adsorbant l'humidité, afin d'éliminer l'humidité accumulée du milieu (22) adsorbant, **caractérisé en ce qu'**un régleur (R) de quantité d'air, suivant l'une des revendications 1 à 10, est monté dans le trajet (26a, R, 22, 26b, 29) de régénération.
